# FASCICULE DE BREVET EUROPEEN

(11) **EP 3 270 039 B1**
(45) Date de publication et mention de la délivrance du brevet: **15.05.2019**
(21) Numéro de dépôt: 17179481.1
(22) Date de dépôt: 04.07.2017
(51) Int. Cl.: F21S 8/00

(54) **MODULE LUMINEUX POUR VÉHICULE AUTOMOBILE**
LEUCHTMODUL FÜR KRAFTFAHRZEUG
LIGHT MODULE FOR A MOTOR VEHICLE

(30) Priorité: 07.07.2016 FR 1656527
(43) Date de publication de la demande: 17.01.2018
(73) Titulaire: Valeo Iluminacion, 23600 Martos (ES)
(72) Inventeur: RUBIA, Juan-Antonio, 23600 MARTOS (ES); RODRIGUEZ, Leandro, 23600 MARTOS (ES); SANCHEZ, Ramon, 23600 Martos (ES); MORENO, Juan-Francisco, 23600 MARTOS (ES); CABANNE, Damien, 93012 BOBIGNY CEDEX (ES); FERNANDEZ, Ricardo, 23600 MARTOS (ES); MOISY, Eric, 93012 BOBIGNY CEDEX (ES)
(74) Mandataire: Oggioni, Baptiste

(56) Documents cités:
- EP-A1- 2 927 567
- WO-A1-2015/092034
- JP-A- 2016 106 351
- US-A1- 2015 300 618

## Description

Le domaine de la présente invention est celui des dispositifs d'éclairage et/ou de signalisation pour véhicules automobiles, et la présente invention se rapporte plus particulièrement aux dispositifs d'éclairage et/ou de signalisation qui mettent en oeuvre au moins une diode électroluminescente organique.

Les dispositifs d'éclairage et/ou de signalisation de véhicule automobile doivent répondre d'une part à des critères fonctionnels, comme la puissance lumineuse et l'agencement spécifique pour la réalisation d'un faisceau déterminé et réglementaire, ou encore une durée de vie élevée, un faible encombrement, une facilité de mise en oeuvre, et ils doivent d'autre part répondre à des conditions esthétiques imposées par les constructeurs automobiles pour une identification visuelle de leur véhicule.

L'utilisation de sources lumineuses mettant en oeuvre une ou plusieurs diodes électroluminescentes est devenu fréquente.

On assiste plus récemment à l'utilisation de diodes électroluminescentes organiques, également désignées dans ce qui suit par son acronyme anglo-saxon OLED (Organic Light Emitting Diode), est classiquement composée de deux électrodes (une anode et une cathode) entre lesquelles sont placées au moins une couche d'émission, réalisée dans un matériau électroluminescent, ainsi qu'un ensemble de couches de transport électronique, couche d'émission et couches de transport électronique étant toutes réalisées dans des matériaux organiques. Afin d'exciter les couches de transport et dans la couche d'émission et obtenir l'électroluminescence du matériau constituant ladite couche d'émission, on doit appliquer une tension électrique entre les deux électrodes.

Bien que la puissance lumineuse émise par une source de type OLED reste inférieure à celle émise par une source à diodes électroluminescentes non organiques (ou LEDs, pour Light Emitting Diode), de telles sources sont de plus en plus utilisées dans le domaine automobile, tant pour l'éclairage ou la signalisation du véhicule à proprement parler que pour des raisons esthétiques, et notamment de signature visuelle et lumineuse du véhicule.

Un module lumineux à OLED pour véhicule automobile se compose généralement d'une partie émissive agencée en regard d'une glace de fermeture d'un projecteur et d'une partie de connexion par laquelle ce module lumineux est connecté à un dispositif d'alimentation électrique et de pilotage du dispositif d'éclairage et/ou de signalisation du véhicule. Cette partie de connexion constitue un point de fragilité de ces modules, compte tenu de la nature même des matériaux qui constituent le module à OLED et de leurs propriétés mécaniques, et de l'effort d'enfichage que doit supporter la partie de connexion au moment de son insertion dans une prise correspondante. Le contexte d'implantation dans un véhicule automobile, qui génère des vibrations, des accélérations, ou encore des contraintes thermiques, augmente le risque de rupture de cette connexion fragilisée. EP 2.927.567 divulgue un module lumineux selon le préambule de la revendication 1.

L'invention a pour but de pallier cet inconvénient et de proposer un module lumineux pour véhicule automobile qui mette en oeuvre une ou plusieurs sources lumineuses à OLED, et dans lequel le risque de rupture de la connexion électrique de ces sources soit réduit au minimum.

Pour ce faire, l'invention a pour objet un module lumineux pour véhicule automobile mettant en oeuvre au moins une diode électroluminescente organique, qui comporte au moins un fil conducteur reliant un premier plot conducteur de ladite au moins une diode électroluminescente organique à un deuxième plot conducteur d'un support dans lequel ladite au moins une diode électroluminescente organique est accueillie. Ainsi, on peut disposer les plots conducteurs à raccorder à distance l'un de l'autre, sans devoir les mettre en contact direct, ce qui permet d'éviter de devoir appuyer trop fortement la diode contre le support et risquer une cassure de la diode.

Par module lumineux, on comprend que le module peut être un module d'éclairage de la route, un module de signalisation du véhicule ou encore un module d'éclairage de l'intérieur du véhicule.

Et par le terme fil, on entend couvrir aussi bien des fils que des rubans, ou bien des formes correspondantes.

Selon différentes caractéristiques de l'invention, prises seules ou en combinaison, on pourra prévoir que :
- ladite au moins une diode électroluminescente organique et ledit support comportent respectivement une pluralité de premiers et de deuxièmes plots conducteurs, un fil conducteur reliant chacun des premiers plots conducteurs avec au moins l'un desdits deuxièmes plots conducteurs ;
- les premiers et deuxièmes plots conducteurs sont en nombre égal, un fil conducteur étant agencé entre chaque paire formée par un premier et un deuxième plot conducteur ;
- les premiers et deuxièmes plots conducteurs sont agencés en série de sorte que chaque premier plot conducteur est en regard d'un deuxième plot conducteur correspondant, les fils conducteurs s'étendant sensiblement parallèlement les uns aux autres ;

- chacun des plots conducteurs de ladite au moins une diode électroluminescente organique et chacun des plots conducteurs correspondants du support de celle-ci sont réalisés dans le même matériau ;
- les plots conducteurs de ladite au moins une diode électroluminescente organique et les plots conducteurs du support comprennent de l'or ou du cuivre ;
- chaque deuxième plot conducteur du support est relié à une piste conductrice agencée sur celui-ci, lesdites pistes conductrices du support sont connectées en un connecteur apte à coopérer avec un connecteur complémentaire d'un dispositif d'alimentation électrique et/ou de pilotage d'un ensemble de signalisation et/ou d'éclairage du véhicule ;
- les plots conducteurs de ladite au moins une diode électroluminescente organique sont agencés sur une partie de celle-ci destinée à assurer sa connexion avec un dispositif d'alimentation électrique et/ou de pilotage du système d'éclairage et/ou de signalisation du véhicule ;
- selon l'invention, la diode électroluminescente organique comporte une partie de connexion configurée pour loger dans le support et une partie émissive s'étendant à l'extérieur du support, lesdits premiers plots conducteurs étant portés par ladite partie de connexion ;
- chaque premier plot conducteur de la partie de connexion de ladite au moins une diode électroluminescente organique est relié à une piste conductrice issue d'une zone d'émission de la partie émissive de cette diode ;
- le nombre de premiers plots conducteurs peut être défini en fonction de la partie émissive de la diode électroluminescente organique et notamment en fonction du nombre de surfaces éclairantes distinctes que comporte cette partie émissive ; on peut notamment prévoir d'avoir une borne d'alimentation négative, c'est à dire reliée à la masse électrique, commune à chacune des surfaces éclairantes, et une borne d'alimentation positive spécifique à chacune des surfaces éclairantes ;
- la partie émissive peut comporter au moins deux zones d'émission, avec une zone d'émission centrale et une zone d'émission périphérique ; ces au moins deux zones sont activables sélectivement ;
- le support comporte une base qui forme une cavité apte à accueillir la partie de connexion de ladite au moins une diode électroluminescente organique ; à titre d'exemple, la base peut comporter des moyens de maintien de ladite partie de connexion dans la cavité ;
- les deuxièmes plots conducteurs du support sont agencés sur une portion surélevée prolongeant une paroi de fond de la cavité ; en d'autres termes, les deuxièmes plots sont disposés au droit de la cavité, sur le pourtour de cette cavité ;
- la portion surélevée est séparée de la paroi de fond par une marche dont la hauteur est sensiblement égale à l'épaisseur de ladite partie de connexion destinée à assurer la connexion électrique de ladite au moins une diode électroluminescente organique ;
- le support comporte un capot de protection apte à venir se placer à la fois sur les premiers plots conducteurs de ladite au moins une diode électroluminescente organique, sur les fils conducteurs et sur les deuxièmes plots conducteurs du support ;
- le capot de protection peut être articulé avec la base du support entre une position fermée dans laquelle il obture la cavité et recouvre les premiers plots conducteurs de ladite au moins une diode électroluminescente organique, les fils conducteurs et les deuxièmes plots conducteurs du support, et une position ouverte dans laquelle il laisse l'accès à ces éléments conducteurs et à l'intérieur de la cavité ;
- le capot peut être fixé à demeure sur la base du support par vissage ou collage ;
- le capot de protection et la base du support comportent chacun des moyens aptes à coopérer pour permettre le maintien en position dudit capot de protection par rapport à ladite base.

L'invention concerne également un dispositif d'éclairage et/ou de signalisation d'un véhicule automobile comportant un module lumineux tel qu'il vient d'être présenté.

Ces différents éléments, ainsi que d'autres caractéristiques, détails et avantages de l'invention, ressortiront plus clairement à la lecture de la description donnée ci-après à titre indicatif et en relation les figures suivantes :
- la figure 1 est une vue schématique en perspective d'un module lumineux selon l'invention, dans lequel une diode électroluminescente organique est montée en position dans un support, ledit support étant dans une position ouverte ;
- la figure 2 est une vue schématique en perspective de la diode électroluminescente organique illustré sur la figure 1 ;
- la figure 3 est une vue schématique en perspective du support mécanique d'accueil d'une diode électroluminescente organique telle qu'illustrée sur la figure 1, selon un mode de réalisation particulier de l'invention ; et
- la figure 4 est une vue en coupe du module lumineux selon l'invention, le support étant rabattu dans la position fermée.

Il faut tout d'abord noter que si les figures exposent l'invention de manière détaillée pour sa mise en oeuvre, lesdites figures peuvent bien entendu servir à mieux définir l'invention le cas échéant.

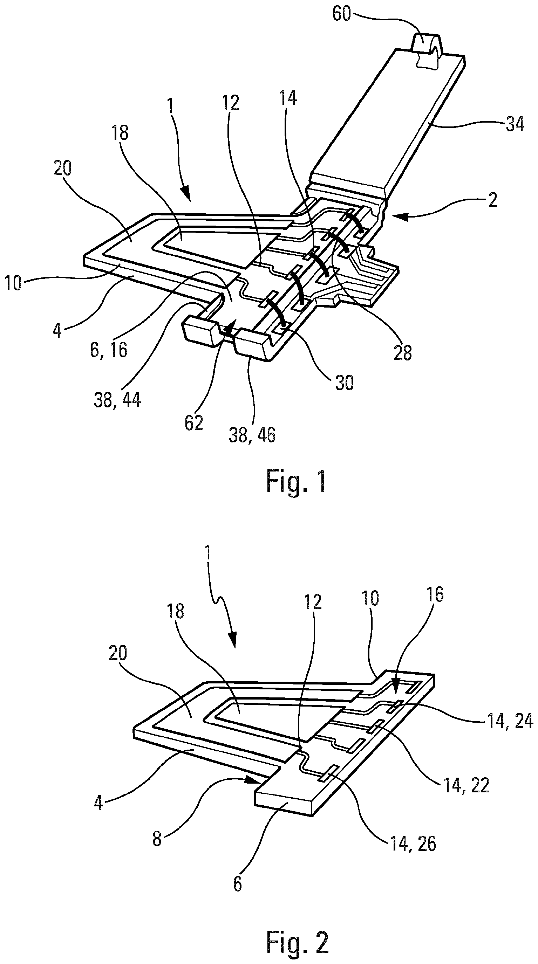

Un module lumineux selon l'invention comporte au moins une diode électroluminescente organique (ou diode OLED, dans ce qui suit) 1, accueillie dans un support 2. La diode électroluminescente organique 1, illustrée seule sur la figure 2, comporte une partie émissive 4, et une partie de connexion 6 destinée à permettre le raccordement électrique de la partie émissive avec un dispositif d'alimentation électrique et/ou de pilotage de l'ensemble de signalisation et/ou d'éclairage du véhicule, ici non représenté. La partie émissive 4 est classiquement composée d'un ensemble de couches polymères prises en sandwich entre une anode et une cathode, et elle peut présenter, compte tenu de la nature des matériaux qui la composent, une certaine souplesse mécanique. Selon différents modes de réalisation, la partie émissive 4 de la diode OLED 1 peut comporter une ou plusieurs surfaces éclairantes distinctes. La partie de connexion 6 est réalisée dans un matériau isolant, mécaniquement plus rigide, et par exemple, et de manière non limitative, un verre ou une résine polymère. Selon le mode de réalisation plus particulièrement illustré sur les figures, elle se présente sous la forme d'une plaque sensiblement parallélépipédique à partir d'un des grands côtés de laquelle s'étend la partie émissive 4 de la diode OLED 1. De manière plus détaillée, en se référant à la figure 2 notamment, la partie émissive 4 de la diode OLED 1 prolonge sensiblement dans un même plan la partie de connexion 6 depuis un premier grand côté 8 de la plaque formant ladite partie de connexion, sensiblement au centre de ce premier grand côté de sorte que des bords d'épaulement 10 sont agencés de part et d'autre de la partie émissive.

Afin de réaliser la connexion électrique de la diode OLED 1 avec un dispositif d'alimentation électrique et/ou de pilotage, des pistes conductrices 12 sont agencées dans la partie de connexion 6. Chacune de ces pistes conductrices est issue de la partie émissive 4 de la diode OLED 1 et se termine, sur la plaque formant la partie de connexion 6 de celle-ci, par un premier plot conducteur 14. Avantageusement, les premiers plots conducteurs 14 sont tous agencés sur une première face 16 de la partie de connexion 6, visible sur les figures 1 et 2. On comprend que le nombre de premiers plots conducteurs 14 est défini en fonction de la partie émissive 4 de la diode OLED 1 et notamment en fonction du nombre de surfaces éclairantes distinctes que comporte la partie émissive 4 de la diode OLED 1. On peut notamment prévoir d'avoir une borne d'alimentation négative, c'est à dire reliée à la masse électrique, commune à chacune des surfaces éclairantes, et une borne d'alimentation positive spécifique à chacune des surfaces éclairantes.

Dans le cas illustré, la partie émissive 4 comporte deux zones d'émission, avec une zone d'émission centrale 18 et une zone d'émission périphérique 20. Selon les conditions de circulation, ou les effets esthétiques recherchés, le module de commande associé au dispositif d'éclairage et/ou de signalisation pourra envoyer une instruction d'allumage de la zone d'émission centrale, une instruction d'allumage de la zone d'émission périphérique, ou une instruction d'allumage simultanée de ces deux zones. Tel qu'illustré, on a prévu une borne négative 22 unique, commune aux deux zones d'émission, et quatre bornes positives. Deux bornes 24 sont reliées à la zone d'émission centrale 18 et deux bornes 26 sont reliées à la zone d'émission périphérique 20, deux bornes étant associées à chacune des zones pour faciliter une alimentation et un éclairage de la zone correspondante qui soient homogènes.

On comprend que le nombre de premiers plots conducteurs 14 est supérieur au nombre de surfaces éclairantes distinctes définies dans la partie émissive 4 de la diode OLED 1.

Selon l'invention, chacun de ces premiers plots conducteurs 14 de la diode OLED 1 est électriquement relié, au moyen d'un fil conducteur 28, à un deuxième plot conducteur 30 agencé sur le support 2. En d'autres termes, l'invention propose de réaliser un pontage électrique entre chaque premier plot conducteur 14 de la diode OLED 1 et un deuxième plot conducteur correspondant 30 du support 2. Il convient que chaque premier plot conducteur 14 soit relié à un deuxième plot conducteur 30, étant entendu que l'on pourrait prévoir un unique plot conducteur 30 pour une pluralité de premiers plots conducteurs.

Dans le cas avantageux d'application de fils conducteurs dédiés respectivement à un premier et un deuxième plot conducteur correspondant, on prévoit que les plots conducteurs sont agencés en série de sorte que chaque premier plot conducteur est en regard d'un deuxième plot conducteur correspondant, les fils conducteurs s'étendant sensiblement parallèlement les uns aux autres.

Avantageusement, chacun des fils conducteurs 28 présente un diamètre de l'ordre de quelques dizaines à quelques centaines de microns, et il comporte une âme réalisée dans un matériau connu pour ses propriétés de conductivité électrique tel que, à titre d'exemple, de l'or ou du cuivre. Le matériau qui constitue l'âme de chaque fil conducteur 28, que ce soit, dans l'exemple donné, de l'or ou du cuivre, est également choisi pour réaliser les premiers plots conducteurs 14 de la diode OLED 1 et les deuxièmes plots conducteurs 30 du support 2. D'une manière plus générale, il peut être intéressant que les plots conducteurs de la diode OLED 1 et du support 2, respectivement 14 et 30, soient réalisés dans le même matériau, choisi pour ses propriétés de conductivité électrique.

On décrira ci-après la position des deuxièmes plots conducteurs 30 dans le support de sorte qu'ils soient positionnés de façon optimale en regard des premiers plots conducteurs 14 pour faciliter le pontage par fil électrique.

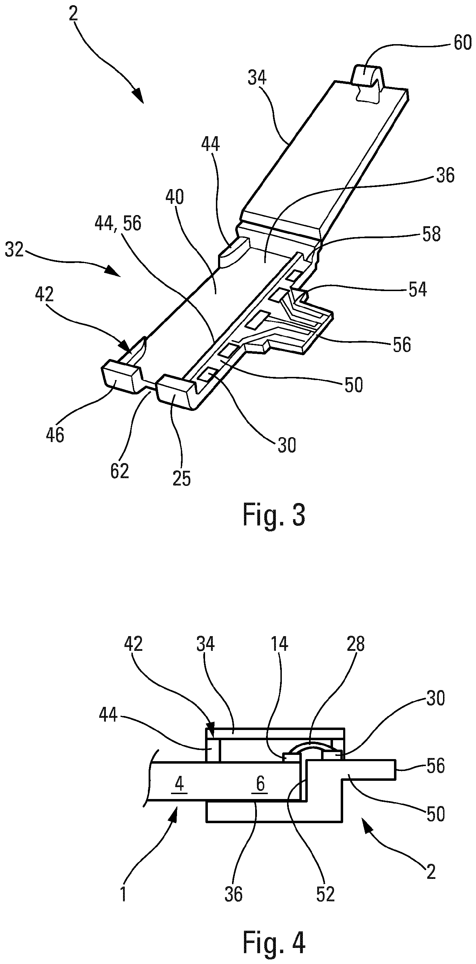

Le support 2, illustré seul sur la figure 3 dans un mode de réalisation particulier, comporte une base 32 et un capot de protection 34 monté pivotant sur l'un des bords pour autoriser une position ouverte, illustrée sur les figures 1 à 3, dans laquelle la base est dégagée et une position fermée, illustrée sur la figure 4, dans laquelle le capot de protection 34 vient en recouvrement de la base 32.

La base 32 présente une paroi de fond 36 sous forme, selon le mode de réalisation illustré par les figures, d'une plaque sensiblement rectangulaire dont les dimensions sont sensiblement identiques à celles d'une face inférieure de la partie de connexion 6 de la diode OLED 1, c'est-à-dire la face opposée à la face supérieure 16 de cette même partie de connexion 6 sur laquelle sont agencés les premiers plots conducteurs 14.

La base 32 comporte en outre des parois latérales 38 venant border au moins partiellement la paroi de fond. Les parois latérales prolongent sensiblement perpendiculairement la paroi de fond 36 en définissant de la sorte une cavité 40 apte à recevoir la partie de connexion 6, l'extrémité supérieure 42 de ces parois latérales 38, c'est-à-dire l'extrémité tournée à l'opposé de la paroi de fond 36, étant susceptible de servir de butée de position au capot de protection 34 dans sa position fermée.

On comprend que les parois latérales 38 permettent de maintenir transversalement la plaque formant partie de connexion 6 de la diode OLED 1 à l'intérieur de la cavité tandis que la paroi de fond 36 et le capot de protection 34, lorsqu'il se trouve dans sa position fermée, la retiennent verticalement.

Selon le mode de réalisation plus particulièrement illustré sur les figures, ces moyens de maintien consistent en un ensemble de premières parois latérales 44 agencées parallèlement sur les grands côtés de la paroi de fond 36 et un ensemble de deuxièmes parois latérales 46 agencées parallèlement le long des petits côtés de la paroi de fond 36.

Plus précisément, les parois latérales sont définies et agencées de telle manière que, lorsque la partie de connexion 6 de la diode OLED 1 est accueillie contre la paroi de fond 36 dans la cavité 40, les premières parois latérales 44 forment une butée contre l'épaisseur du grand côté de la plaque formant ladite partie de connexion 6, tandis que les deuxièmes parois latérales 46 forment une butée contre l'épaisseur du petit côté de la plaque formant ladite partie de connexion 6.

L'ensemble des parois latérales définit ainsi une forme de cadre dans lequel la partie de connexion 6 de la diode OLED 1 est accueillie et maintenue.

L'une des premières parois latérales 44 comporte une ouverture 48 qui sépare cette première paroi latérale 44 en deux parties, définissant un passage pour la diode OLED 1. Ainsi, lorsque le capot de protection est rabattu, la partie de connexion 6 peut loger dans la cavité du support tandis que la partie émissive 4 peut s'étendre en dehors du support pour participer à la fonction d'éclairage et/ou de signalisation. Les deux parties de la première paroi latérale 44 présentant l'ouverture 48 forment des butées coopérant avec les bords d'épaulement 10 de la partie de connexion 6 de la diode OLED 1.

Tel que cela sera décrit ci-après, l'autre première paroi latérale 44 est associée aux différents plots conducteurs et à la liaison électrique par fils, tandis que les deuxièmes parois latérales 46 sont associées aux moyens d'articulation et de fixation du capot de protection.

Dans une variante non représentée, la base 32 du support 2 peut comporter également des éléments permettant de faciliter l'engagement et la mise en place de la partie de connexion 6 de la diode OLED 1 au sein de la cavité 40, et par exemple, une forme apte à coopérer avec une forme complémentaire définie sur la partie de connexion 6.

Selon le mode de réalisation de l'invention illustré sur les figures, les deuxièmes plots conducteurs 30 du support 2 sont agencés sur l'un des grands côtés de la base 32, à l'opposé de l'ouverture 48 laissant passage à la diode OLED. Plus précisément, tel que cela est visible sur la figure 4, les deuxièmes plots conducteurs 30 du support 2 sont agencés sur une portion surélevée 50 en saillie de la paroi de fond 36 de la cavité 40, ladite portion surélevée s'étendant sur toute la longueur, c'est-à-dire le long d'un grand côté, de la base. La paroi de fond 36 et la portion surélevée 50 sont séparées par une marche 52 qui forme une des deux premières parois latérales définissant la cavité du support. Avantageusement, la hauteur de cette marche 52 est sensiblement égale à l'épaisseur de la plaque formant partie de connexion 6 de la diode OLED 1, de sorte que lorsque la partie de connexion est en position dans la cavité du support, les différents plots conducteurs à connecter entre eux s'étendent à la même hauteur, c'est-à-dire à la même distance de la paroi de fond 36, sans paroi en saillie entre deux plots conducteurs à connecter.

Cette portion surélevée 50 présente sur une face supérieure, c'est-à-dire une face tournée à l'opposé de la paroi de fond, les deuxièmes plots conducteurs et des pistes conductrices 54. Chaque deuxième plot conducteur 30 est ainsi relié à une piste conductrice 54 qui sont rassemblées à l'extrémité opposée en un connecteur 56 apte à coopérer avec un connecteur complémentaire du dispositif électrique du véhicule pour réaliser la connexion électrique de ce dernier à un dispositif d'alimentation électrique et/ou de pilotage de l'ensemble d'éclairage et/ou de signalisation du véhicule.

Selon des modes de réalisation alternatifs, non représentés, les deuxièmes plots conducteurs 30 du support 2, ainsi que les pistes conductrices 54 associées et le connecteur 56 que ces dernières forment en se rassemblant peuvent être portés par une pièce distincte du support 2, fabriquée indépendamment et rattachée à ce dernier lorsque la connexion électrique est réalisée. En d'autres termes, la portion surélevée 50 peut être réalisé en une pièce indépendante, distincte de la base 32 du support 2. Dans ce cas, le rattachement de cette portion surélevée 50, porteuse des deuxièmes plots conducteurs 30, des pistes conductrices 54 et du connecteur 56, à la base 32 du support 2, peut être réalisé, à titre d'exemples non exhaustifs, par clipsage ou par coopération d'ergots et encoches complémentaires portés respectivement par ces deux pièces. Un avantage d'un tel mode de réalisation est qu'il permet une fabrication séparée, d'une part, de la base 32 du support 2, simple pièce plastique pouvant être obtenue à bas coût par moulage et, d'autre part, de la pièce de connexion proprement dite, porteuse des deuxièmes plots conducteurs 30, des pistes conductrices 54 et du connecteur 56.

On a précisé précédemment que le support 2, destiné à accueillir une diode OLED 1 telle que décrite plus haut et illustrée par les figures, comporte un capot de protection 34 apte à venir fermer la cavité 40 de logement de la diode. Plus précisément, ce capot de protection 34 est apte à venir se placer à la fois sur la face supérieure 16 de la partie de connexion 6 de la diode OLED 1, sur les fils conducteurs 28, et sur les deuxièmes plots conducteurs 30 du support 2. Avantageusement, le capot de protection 34 présente donc une forme sensiblement parallélépipédique dont les dimensions sont complémentaires de celles de la base 32 du support 2 et de la portion surélevée 50, qu'elle soit réalisée d'un seul tenant avec le support ou qu'elle soit rapportée.

Tel que cela a pu être précisé précédemment, le capot de protection 34 est articulé avec la base 32 du support 2, au moyen d'une charnière 58 formée sur une des deux deuxièmes parois latérales 46, le capot de protection 34 étant ainsi mobile entre une position ouverte dans laquelle il est basculé autour de sa charnière 58 pour laisser accès au volume intérieur de la cavité 40 précédemment décrite, et une position fermée, non représentée par les figures, dans laquelle il ferme la cavité 40 précédemment décrite et recouvre à la fois la partie de connexion 6 de la diode OLED 1, lorsque celle-ci est logé dans le support 2, ainsi que les fils conducteurs 28, et la portion surélevée 50 sur laquelle sont agencés les deuxièmes plots conducteurs 30 et les pistes conductrices 54 du support 2.

Des moyens pour maintenir le capot de protection en place peuvent consister en un appendice 60, disposé sur le petit côté du capot de protection opposé à celui par lequel il est articulé avec la base 32 du support 2 au moyen de la charnière 58, et apte à coopérer avec un ensemble de formes complémentaires agencées sur la base 32 du support 2. L'appendice 60 peut présenter sensiblement la forme d'un crochet venant s'engager dans une encoche 62 de la base 32 du support 2 lorsque le capot de protection 34 est rabattu sur la partie de connexion 6. Le crochet de l'appendice 60 s'engage alors sous la base 32 du support 2, réalisant ainsi le maintien par clipsage du capot de protection 34. L'encoche 62 peut être est formée par un dégagement entre deux parties de la deuxième paroi latérale 46 correspondante.

Il convient de noter que le support 2 et le capot de protection 34 sont configurés de telle manière que, une fois le capot est placé dans sa position fermée dans laquelle il recouvre la plaque formant partie de connexion 6 de la diode OLED 1, les fils conducteurs 28 et les deuxièmes plots conducteurs 30 du support 2, il n'entre pas en contact avec les fils conducteurs 28. A cet effet, au moins l'une des parois, parmi la deuxième paroi latérale opposée à la charnière 58 ou la première paroi latérale porteuse de l'ouverture 48 de passage de la diode OLED, est surélevée par rapport à la deuxième paroi latérale séparant les plots conducteurs, pour que générer une butée du capot de protection dans la position fermée qui permette le passage des fils conducteurs 28 entre la portion surélevée 50 et le capot de protection.

Dans ce contexte, il est envisageable, selon des modes de réalisation alternatifs de l'invention non représentés par les figures, que la face interne du capot de protection 34 soit recouverte d'une couche d'un matériau isolant présentant une certaine souplesse et par exemple un silicone. En venant exercer une très légère pression sur les fils conducteurs 28, une telle couche d'un tel matériau permettrait de limiter toute vibration éventuelle au sein de la cavité 40 et de réaliser une certaine rigidification de l'ensemble.

L'invention atteint ainsi son but, en proposant un module lumineux qui met en oeuvre une diode OLED 1 dont la connexion électrique présente une solidité renforcée, à la fois grâce à la présence des fils conducteurs 28 formant pontage entre la diode OLED 1 et son support 2 et grâce à la forme particulière du capot de protection 34 du support 2, qui recouvre en les protégeant les éléments de la connexion électrique, que ce soit les plots conducteurs de la diode OLED et de son support, ou bien les fils conducteurs réalisant le pontage entre la partie de connexion 6 de la diode OLED et le support 2.

L'utilisation de fils conducteurs pour réaliser la connexion électrique des plots conducteurs permet d'éviter un contact direct entre ces plots, qui nécessiterait d'avoir à exercer une pression sur l'OLED lors de sa mise en place dans le support pour assurer ce contact direct. La fragilité de la diode OLED impliquant dans ce cas un risque de casse.

Il est toutefois à noter que l'invention ne saurait se réduire aux moyens et configurations décrits et illustrés, mais qu'elle s'applique également à tous moyens ou configurations équivalents et à toute combinaison de tels moyens.

En particulier, si l'invention a été décrite dans ce qui précède dans un exemple de réalisation dans lequel une seule diode électroluminescente organique est associée à un seul support dans le module lumineux considéré, il va de soi que l'invention s'étend sans limitation aux cas où plusieurs diodes électroluminescentes organiques sont associées à un même support ou aux cas où le module lumineux considéré comporte plusieurs diodes électroluminescentes organiques et plusieurs supports. De même, les formes de la plaque formant partie de connexion 6 de la diode OLED et du support 2 décrites ici sont indicatives, et l'invention s'étend également à toute autre forme de partie de connexion et de support, dès lors que le support permet une mise en position fiable de la diode OLED pour que les plots conducteurs de la diode soient en regard des plots conducteurs du support et que l'on puisse ainsi réaliser une connexion filaire rapide et sure.

## Revendications

1. Module lumineux pour véhicule automobile comportant au moins une diode électroluminescente organique (1) et un support (2) dans lequel ladite au moins une diode électroluminescente organique (1) est accueillie, et au moins un fil conducteur (28) reliant un premier plot conducteur (14) de ladite au moins une diode électroluminescente organique (1) à un deuxième plot conducteur (30) du support (2); **caractérisé en ce que** la diode électroluminescente organique (1) comporte une partie de connexion (6) configurée pour loger dans le support (2) et une partie émissive (4) s'étendant à l'extérieur du support (2), lesdits premiers plots conducteurs (14) étant portés par ladite partie de connexion.

2. Module selon la revendication 1, **caractérisé en ce que** ladite au moins une diode électroluminescente organique (1) et ledit support (2) comportent respectivement une pluralité de premiers et de deuxièmes plots conducteurs (14, 30), un fil conducteur (28) reliant chacun des premiers plots conducteurs (14) avec au moins l'un desdits deuxièmes plots conducteurs (30).

3. Module selon la revendication 2, **caractérisé en ce que** les premiers et deuxièmes plots conducteurs (14, 30) sont en nombre égal, un fil conducteur (28) étant agencé entre chaque paire formée par un premier et un deuxième plot conducteur.

4. Module selon la revendication 3, **caractérisé en ce que** les premiers et deuxièmes plots conducteurs sont agencés en série de sorte que chaque premier plot conducteur (14) est en regard d'un deuxième plot conducteur (30) correspondant, les fils conducteurs (28) s'étendant sensiblement parallèlement les uns aux autres.

5. Module selon l'une des revendications précédentes, **caractérisé en ce que** chacun des plots conducteurs (14) de ladite au moins une diode électroluminescente organique (1) et chacun des plots conducteurs (30) correspondants du support (2) de celle-ci sont réalisés dans le même matériau.

6. Module selon l'une des revendications précédentes, **caractérisé en ce que** chaque deuxième plot conducteur (30) du support (2) est relié à une piste conductrice (54) agencée sur celui-ci, lesdites pistes conductrices (54) du support (2) étant connectées à un connecteur (56) apte à coopérer avec un connecteur complémentaire d'un dispositif d'alimentation électrique et/ou de pilotage d'un ensemble de signalisation et/ou d'éclairage du véhicule.

7. Module selon l'une des revendications précédentes, **caractérisé en ce que** les plots conducteurs (14) de ladite au moins une diode électroluminescente organique (1) sont agencés sur une partie (6) de celle-ci destinée à assurer sa connexion avec un dispositif d'alimentation électrique et/ou de pilotage du système d'éclairage et/ou de signalisation du véhicule.

8. Module selon l'une des revendications précédentes, **caractérisé en ce que** chaque premier plot conducteur (14) de la partie de connexion (6) de ladite au moins une diode électroluminescente organique (1) est relié à une piste conductrice (12) issue d'une zone d'émission (18,20) de la partie émissive (4) de cette diode.

9. Module selon l'une des revendications 7 à 8, **caractérisé en ce que** le support (2) comporte une base (32) qui forme une cavité (40) apte à accueillir la partie de connexion (6) de ladite au moins une diode électroluminescente organique (1).

10. Module selon la revendication précédente, **caractérisé en ce que** les deuxièmes plots conducteurs (30) du support (2) sont agencés sur une portion surélevée (50) prolongeant une paroi de fond (36) de la cavité (40).

11. Module selon la revendication précédente, **caractérisé en ce que** la portion surélevée (50) est séparée de la paroi de fond (36) par une marche (52) dont la hauteur est sensiblement égale à l'épaisseur de ladite partie de connexion (6) destinée à assurer la connexion électrique de ladite au moins une diode électroluminescente organique (1).

12. Module selon l'une des revendications précédentes, **caractérisé en ce que** le support (2) comporte un capot de protection (34) apte à venir se placer à la fois sur les premiers plots conducteurs (14) de ladite au moins une diode électroluminescente organique (1), sur les fils conducteurs (28) et sur les deuxièmes plots conducteurs (30) du support (2).

13. Module selon la revendication précédente, **caractérisé en ce que** le capot de protection (34) est articulé avec la base (32) du support (2) entre une position fermée dans laquelle il obture la cavité (40) et recouvre les premiers plots conducteurs (14) de ladite au moins une diode électroluminescente organique (1), les fils conducteurs (28) et les deuxièmes plots conducteurs (30) du support (2), et une position ouverte dans laquelle il laisse l'accès à ces éléments conducteurs et à l'intérieur de la cavité (40).

14. Module selon l'une ou l'autre des revendications 12 ou 13, **caractérisé en ce que** le capot de protection (34) et la base (32) du support (2) comportent chacun des moyens (60, 62) aptes à coopérer pour permettre le maintien en position dudit capot de protection (34) par rapport à ladite base (32).

## Patentansprüche

1. Leuchtmodul für ein Kraftfahrzeug, das mindestens eine organische Elektrolumineszenzdiode (1) und einen Träger (2), in dem die mindestens eine Elektrolumineszenzdiode (1) aufgenommen wird, und mindestens einen Leiterdraht (28) aufweist, der ein erstes leitendes Kontaktplättchen (14) der mindestens einen organischen Elektrolumineszenzdiode (1) mit einem zweiten leitenden Kontaktplättchen (30) des Trägers (2) verbindet, **dadurch gekennzeichnet, dass** die organische Elektrolumineszenzdiode (1) einen Verbindungsteil (6), der konfiguriert ist, im Träger (2) angeordnet zu werden, und einen emittierenden Teil (4) aufweist, der sich außerhalb des Trägers (2) erstreckt, wobei die ersten leitenden Kontaktplättchen (14) vom Verbindungsteil getragen werden.

2. Modul nach Anspruch 1, **dadurch gekennzeichnet, dass** die mindestens eine organische Elektrolumineszenzdiode (1) und der Träger (2) je eine Vielzahl erster und zweiter leitender Kontaktplättchen (14, 30) aufweisen, wobei ein Leiterdraht (28) jedes der ersten leitenden Kontaktplättchen (14) mit mindestens einem der zweiten leitenden Kontaktplättchen (30) verbindet.

3. Modul nach Anspruch 2, **dadurch gekennzeichnet, dass** die ersten und zweiten leitenden Kontaktplättchen (14, 30) in gleicher Anzahl vorliegen, wobei ein Leiterdraht (28) zwischen jedem Paar angeordnet ist, das von einem ersten und einem zweiten leitenden Kontaktplättchen gebildet wird.

4. Modul nach Anspruch 3, **dadurch gekennzeichnet, dass** die ersten und zweiten leitenden Kontaktplättchen in Reihe angeordnet sind, so dass jedes erste leitende Kontaktplättchen (14) vor einem entsprechenden zweiten leitenden Kontaktplättchen (30) angeordnet ist, wobei die Leiterdrähte (28) sich im Wesentlichen parallel zueinander erstrecken.

5. Modul nach einem der vorhergehenden Ansprüche, **dadurch gekennzeichnet, dass** jedes der leitenden Kontaktplättchen (14) der mindestens einen organischen Elektrolumineszenzdiode (1) und jedes der entsprechenden leitenden Kontaktplättchen (30) von deren Träger (2) aus dem gleichen Material hergestellt sind.

6. Modul nach einem der vorhergehenden Ansprüche, **dadurch gekennzeichnet, dass** jedes zweite leitende Kontaktplättchen (30) des Trägers (2) mit einer Leiterbahn (54) verbunden ist, die auf diesem angeordnet ist, wobei die Leiterbahnen (54) des Trägers (2) mit einem Verbinder (56) verbunden sind, der mit einem komplementären Verbinder einer Vorrichtung zur Stromversorgung und/oder zur Steuerung einer Signal- und/oder Beleuchtungseinheit des Fahrzeugs zusammenwirken kann.

7. Modul nach einem der vorhergehenden Ansprüche, **dadurch gekennzeichnet, dass** die leitenden Kontaktplättchen (14) der mindestens einen organischen Elektrolumineszenzdiode (1) auf einem Teil (6) von dieser angeordnet sind, der dazu bestimmt ist, ihre Verbindung mit einer Vorrichtung zur Stromversorgung und/oder zur Steuerung des Beleuchtungs- und/oder Signalsystems des Fahrzeugs zu gewährleisten.

8. Modul nach einem der vorhergehenden Ansprüche, **dadurch gekennzeichnet, dass** jedes erste leitende Kontaktplättchen (14) des Verbindungsteils (6) der mindestens einen organischen Elektrolumineszenzdiode (1) mit einer Leiterbahn (12) verbunden ist, die von einem Emissionsbereich (18, 20) des emittierenden Teils (4) dieser Diode stammt.

9. Modul nach einem der Ansprüche 7 bis 8, **dadurch gekennzeichnet, dass** der Träger (2) eine Basis (32) aufweist, die einen Hohlraum (40) bildet, der den Verbindungsteil (6) der mindestens einen organischen Elektrolumineszenzdiode (1) aufnehmen kann.

10. Modul nach dem vorhergehenden Anspruch, **dadurch gekennzeichnet, dass** die zweiten leitenden Kontaktplättchen (30) des Trägers (2) auf einem erhöhten Abschnitt (50) angeordnet sind, der eine Bodenwand (36) des Hohlraums (40) verlängert.

11. Modul nach dem vorhergehenden Anspruch, **dadurch gekennzeichnet, dass** der erhöhte Abschnitt (50) von der Bodenwand (36) durch eine Stufe (52) getrennt ist, deren Höhe im Wesentlichen gleich der Dicke des Verbindungsteils (6) ist, der dazu bestimmt ist, die elektrische Verbindung der mindestens einen organischen Elektrolumineszenzdiode (1) zu gewährleisten.

12. Modul nach einem der vorhergehenden Ansprüche, **dadurch gekennzeichnet, dass** der Träger (2) eine Schutzhaube (34) aufweist, die gleichzeitig auf dem ersten leitenden Kontaktplättchen (14) der mindestens einen organischen Elektrolumineszenzdiode (1), auf den Leiterdrähten (28) und auf dem zweiten leitenden Kontaktplättchen (30) des Trägers (2) angeordnet werden kann.

13. Modul nach dem vorhergehenden Anspruch, **dadurch gekennzeichnet, dass** die Schutzhaube (34) mit der Basis (32) des Trägers (2) zwischen einer geschlossenen Stellung, in der sie den Hohlraum (40) verschließt und die ersten leitenden Kontaktplättchen (14) der mindestens einen organischen Elektrolumineszenzdiode (1), die Leiterdrähte (28) und die zweiten leitenden Kontaktplättchen (30) des Trägers (2) bedeckt, und einer offenen Stellung gelenkig verbunden ist, in der sie den Zugang zu diesen Leiterelementen und ins Innere des Hohlraums (40) zulässt.

14. Modul nach dem einen oder anderen der Ansprüche 12 oder 13, **dadurch gekennzeichnet, dass** die Schutzhaube (34) und die Basis (32) des Trägers (2) je Einrichtungen (60, 62) aufweisen, die zusammenwirken können, um den Halt der Schutzhaube (34) in Stellung bezüglich der Basis (32) zu ermöglichen.

## Claims

1. Light module for a motor vehicle comprising at least one organic light-emitting diode (1) and a support (2) wherein said at least one organic light-emitting diode (1) is accommodated, and at least one conductive wire (28) connecting a first conductive pad (14) of said at least one organic light-emitting diode (1) to a second conductive pad (30) of the support (2); **characterized in that** the organic light-emitting diode (1) comprises a connecting part (6) configured for being housed in the support (2) and an emitting part (4) extending outside the support (2), said first conductive pads (14) being borne by said connecting part.

2. Module according to Claim 1, **characterized in that** said at least one organic light-emitting diode (1) and said support (2) respectively comprise a plurality of first and second conductive pads (14, 30), a conductive wire (28) connecting each of the first conductive pads (14) with at least one of said second conductive pads (30) .

3. Module according to Claim 2, **characterized in that** the first and second conductive pads (14, 30) are equal in number, a conductive wire (28) being arranged between each pair formed by a first and a second conductive pad.

4. Module according to Claim 3, **characterized in that** the first and second conductive pads are arranged in series so that each first conductive pad (14) is opposite a corresponding second conductive pad (30), the conductive wires (28) extending substantially parallel to each other.

5. Module according to one of the preceding claims, **characterized in that** each of the conductive pads (14) of said at least one organic light-emitting diode (1) and each of the corresponding conductive pads (30) of the support (2) thereof are made of the same material.

6. Module according to one of the preceding claims, **characterized in that** each second conductive pad (30) of the support (2) is connected to a conductive track (54) arranged thereon, said conductive tracks (54) of the support (2) being connected to a connector (56) capable of engaging with a complementary connector of a device for the electrical power supply and/or control of a signalling and/or lighting assembly of the vehicle.

7. Module according to one of the preceding claims, **characterized in that** the conductive pads (14) of said at least one organic light-emitting diode (1) are arranged on a part (6) thereof intended to ensure its connection with a device for the power supply and/or control of the lighting and/or signalling system of the vehicle.

8. Module according to one of the preceding claims, **characterized in that** each first conductive pad (14) of the connecting part (6) of said at least one organic light-emitting diode (1) is connected to a conductive track (12) originating from an emission area (18, 20) of the emitting part (4) of this diode.

9. Module according to one of claims 7 and 8, **characterized in that** the support (2) comprises a base (32) which forms a cavity (40) capable of accommodating the connecting part (6) of said at least one organic light-emitting diode (1).

10. Module according to the preceding claim, **characterized in that** the second conductive pads (30) of the support (2) are arranged on a raised portion (50) extending a bottom wall (36) of the cavity (40).

11. Module according to the preceding claim, **characterized in that** the raised portion (50) is separated from the bottom wall (36) by a step (52), the height of which is substantially equal to the thickness of said connecting part (6) intended to ensure the electrical connection of said at least one organic light-emitting diode (1).

12. Module according to one of the preceding claims, **characterized in that** the support (2) comprises a protective cover (34) capable of being placed at the same time on the first conductive pads (14) of said at least one organic light-emitting diode (1), on the conductive wires (28) and on the second conductive pads (30) of the support (2).

13. Module according to the preceding claim, **characterized in that** the protective cover (34) is articulated with the base (32) of the support (2) between a closed position in which it closes off the cavity (40) and covers the first conductive pads (14) of said at least one organic light-emitting diode (1), the conductive wires (28) and the second conductive pads (30) of the support (2), and an open position in which it leaves access to these conductive elements and to the inside of the cavity (40).

14. Module according to one or other of Claims 12 or 13, **characterized in that** the protective cover (34) and the base (32) of the support (2) each comprise means (60, 62) capable of engaging to enable said protective cover (34) to be held in position with respect to said base (32).
